# EUROPEAN PATENT APPLICATION

(11) **EP 3 006 890 A1**
(43) Date of publication of application: **13.04.2016**
(21) Application number: 13885613.3
(22) Date of filing: 28.05.2013
(51) Int. Cl.: G01B 11/02

(54) **DIMENSION MEASUREMENT DEVICE**

(71) Applicant: Shinko Denshi Co., Ltd., Tokyo 113-0034 (JP)
(72) Inventor: FUJIHARA Kazushi, Tokyo 113-0034 (JP)
(74) Representative: HWP Intellectual Property
(86) International application number: PCT/JP2013/064772
(87) International publication number: WO 2014/192080

(57) **Abstract**

A dimension measurement device provided with a flat plane that forms the xy plane of a Cartesian coordinate system comprising x, y and z axes and with an x-axis direction measurement unit, y-axis direction measurement unit and z-axis direction measurement unit, wherein the axial direction measurement units each have an array of a plurality of light emitting/receiving unit boards (30), which include a plurality of pairs of light-emitting elements and light-receiving elements and a shift register, and the axial direction measurement units have controllers (51, 52, 53); for controlling the shift registers so as to scan through the light-emitting elements and light-receiving elements lined up in the axial directions and calculating the dimensions of the freight in each of the axial directions on the basis of the output of the light receiving elements. Each controller (51, 52, 53) performs scanning at the same time.

## Description

### Field of Invention

The present invention relates to a dimension measurement device for simultaneously measuring length, width and height of a freight contained in a cuboid or cubic outer box, thereby enabling to measure such dimensions in a shorter time.

### Background of Invention

Conventionally, known is a dimension measurement device for simultaneously measuring length, width and height of a freight contained in a cardboard box. Such dimension measurement devices have been used in distribution business fields, such as, for example, a marine transportation, a land transportation, an air transportation and a warehouse.

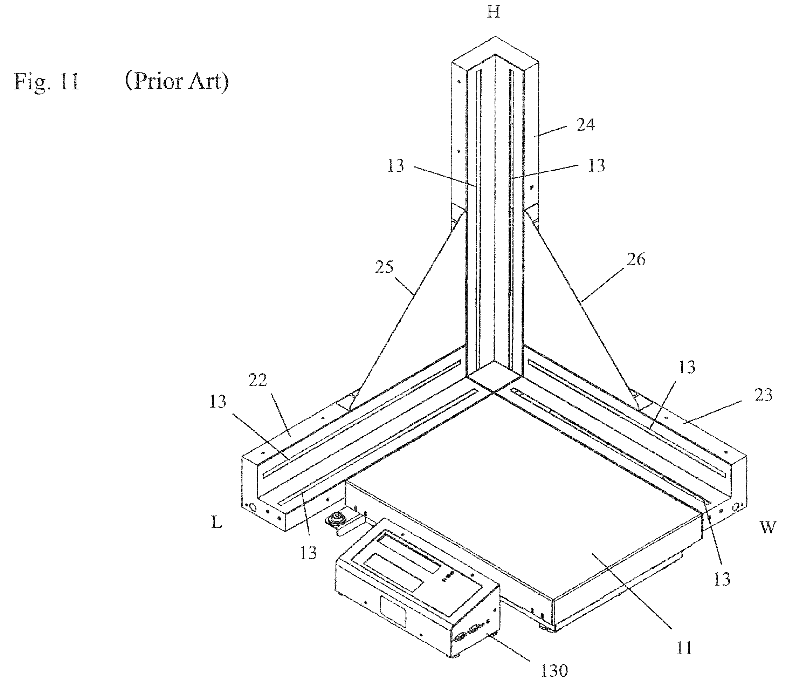

As shown in FIG. 11, such dimension measurement device comprises, a measurement table 11 having a rectangular plane for placing a freight to be measured, a length measurement section 22 fixed along one of the orthogonal sides of the measurement table 11 for measuring the length (L) of the freight, a width measurement section 23 fixed along the other on the orthogonal sides of the measurement table 11 for measuring the width (W) of the freight, a height measurement section 24 fixed at the corner of the measurement table 11 where the length measurement section 22 and the width measurement section 23 cross for measuring the height (H) of the freight, a side plate 25 fixed to the length measurement section 22 and the height measurement section 24, and a side plate 26 fixed to the width measurement section 23 and the height measurement section 24, wherein the measurement table 11 of the dimension measurement device is supported by a load detection unit (not shown).

The length (L), width (W) and height (H) of the freight that are measured by the length measurement section 22, the width measurement section 23 and the height measurement section 24 are displayed on a display unit 130 together with the weight of the freight detected by the load detection unit.

Dimensions of the freight can be measured by disposing pairs of light-emitting elements and light-receiving elements at a predetermined spacing and by identifying locations of incident light rays to the light-receiving elements from the light-emitting elements that are interrupted by the freight.

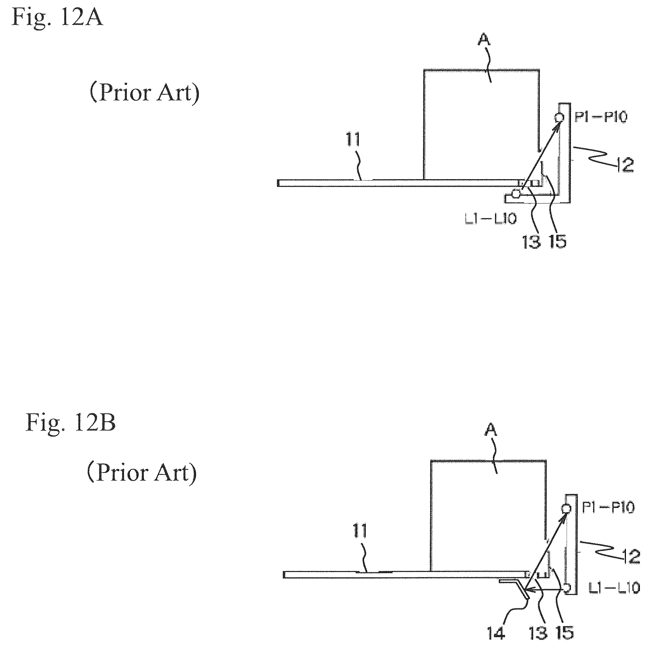

The Patent Document 1 as given hereinafter discloses a way of disposing pairs of light-emitting elements and light-receiving elements as shown in FIG. 12. In FIG. 12 (a), light-receiving elements P1 ∼ P10 are disposed on the vertical plane of an L-shaped board 12 and light-emitting elements L1 ∼ L10 are disposed on a horizontal plane so that light rays from the light-emitting elements L1 ∼ L10 enter the light-receiving elements P1 ∼ P10 diagonally through holes in the measurement table 11. If the freight A is in existence, light rays are interrupted by an edge of the freight A.

On the other hand, in FIG. 12 (b), light-receiving elements P1 ∼ P10 and light-emitting elements L1 ∼ L10 are disposed on the flat board 12, wherein light rays emitted from the light emitting elements L1 ∼ L10 are reflected by a reflection mirror 14 so as to diagonally enter the light-receiving elements P1 ∼ P10 through holes in the measurement table 11.

### Prior Art Document

### Patent Document:

Patent Document 1: JP-A-07-71922 (1995-3-17)

### Summary of Invention

### Problems to be solved by the Invention:

However, one problem of the conventional dimension measurement device is taking a considerable time to complete dimension measurements because scanning operations of sequentially activating pairs of the light emitting-elements and the light-receiving elements and detecting the outputs of the light-receiving elements are sequentially switched under control of a controller for the length measurement section 22, then the width measurement section 23 and finally the height measurement section 24.

Another problem is difficulty of precisely adjusting the dimension measurement range in accordance with customer's needs.

In consideration of the aforementioned circumstances, the present invention was made to provide a dimension measurement device capable of reducing the measurement time and also changing the measurement range in accordance with the customer's needs.

### Means to Solve the Problems

The present invention is a dimension measurement device comprising a mounting plane to define an xy plane of a Cartesian coordinate system of x-axis, y-axis and z-axis, an x-axis direction measurement section for measuring the dimension of a cuboid or cubic freight mounted on the mounting plane in the x-axis direction, a y-axis direction measurement section for measuring the dimension of the freight in the y-axis direction, and a z-axis direction measurement section for measuring the dimension of the freight in the z-axis direction: the x-axis direction measurement section comprising plural arrangements of light emitting/receiving unit boards each including a predetermined number of pairs of light-emitting elements and light-receiving elements and a shift register for driving the light-emitting elements and the light-receiving elements, and an x-axis controller for controlling the shift register of the light emitting/receiving unit board to continuously scan in one direction the pairs of light-emitting elements and light-receiving elements arranged in the x-axis direction so as to calculate the dimension of the freight in the x-axis direction from the origin based on the outputs from the light-receiving elements; the y-axis measurement section comprising plural arrangements of the light emitting/receiving unit boards and a y-axis controller for controlling the shift register of the light emitting/receiving unit board to continuously scan in one direction the pairs of light-emitting elements and light-receiving elements arranged in the y-axis direction so as to calculate the dimension of the freight in the y-axis direction from the origin based on the outputs from the light-receiving elements; and the z-axis direction measurement section comprising plural arrangements of light emitting/receiving unit boards and a z-axis controller for controlling the shift register of the light emitting/receiving unit board to continuously scan in one direction the pairs of light-emitting elements and light-receiving elements arranged in the z-axis direction so as to calculate the dimension of the freight in the z-axis direction based on the outputs from the light-receiving elements; wherein the x-axis controller, the y-axis controller and the z-axis controller scan at the same time.

According to the dimension measurement device, each of the x-axis direction (L direction) measurement section and the y-axis direction (W direction) measurement section and the z-axis direction (H direction) measurement section is provided with a controller so as to simultaneously scan in each axis, thereby performing dimension measurements in a shorter time. Moreover, the measurement range in each axis can be changed easily by changing the number of the light emitting/receiving unit boards disposed in the axial directions.

Additionally, according to the dimension measurement device of the present invention, at least one of the x-axis controller, the y-axis controller and the z-axis controller performs a first scanning to control a clock signal to be supplied to the respective shift register to detect the output from the light-receiving elements of multiples of k in the arrangement along the axial direction so as to detect the arrangement nk of the light-receiving elements having a different output value from the next preceding arrangement (n - 1)k of the light-receiving elements, and a second scanning to control the clock signal to be supplied to the light-receiving elements from (n - 1)k to (nk - 1) in the arrangement so as to identify the arrangement of the light-receiving element having a different output value from the next preceding light-receiving element, wherein k is 2 or larger integer and n is 1 or larger integer.

Dimensions of the freight can be measured in a relatively low precision in the first scanning and the position of the freight can be measured in a higher precision in the second scanning. Consequently, it is possible to reduce the dimension measurement time.

Also, in the dimension measurement device according to the present invention, the scanning is performed from a position closer to the origin toward a distal position in either one of the x-axis controller and the y-axis controller, while the scanning is performed from a position far from the origin toward a position closer to the origin in the other of the x-axis controller and the y-axis controller.

As a result, despite simultaneous scanning in both x-axis and y-axis directions, it is possible to avoid errors due to y-axis light-receiving elements that may receive reflected light from the x-axis light-emitting elements or x-axis light-receiving elements that may receive reflected light from the y-axis light-emitting elements.

Also, the dimension measurement device according to the present invention further comprises x-direction gap detection means for detecting the gap between the freight and the yz plane by using infrared rays entering diagonally from one of the xy plane and the xz plane to the other near the origin where the x-axis, the y-axis and the z-axis cross, and y-direction gap detection means to detect whether there is any gap between the freight and the xz plane by using infrared rays entering diagonally from one of the xy plane and the yz plane to the other near the origin.

This dimension measurement device is capable of avoiding dimension measurement errors due to the freight that may be shifted from the measurement reference point.

### Advantages of the Invention

The dimension measurement device according to the present invention is capable of completing the dimension measurements in a shorter time and also easily changing the dimension measurement range in accordance with the customer's request.

### Brief Description of the Drawings

- FIG. 1: is a chart to show the measurement mechanism of a first embodiment of the dimension measurement device according to the present invention.
- FIG. 2: illustrates the light emitting/receiving unit board of the measurement mechanism as shown in FIG. 1.
- FIG. 3: is a circuit schematic of the light emitting/receiving unit board.
- FIG. 4: is a block diagram to show the controller of the measurement mechanism as shown in FIG. 1.
- FIG. 5: is a flowchart to show a two-stage scanning procedure.
- FIG. 6: shows waveforms in a first stage scanning of the two-stage scanning.
- FIG. 7: shows waveforms to illustrate the relationship of the clock signal, the detection outputs from the light-receiving elements, the output from the signal processing section and the timing signal for A/D conversion in the first stage scanning.
- FIG. 8: shows waveforms to illustrate the relationship of the clock signal, the detection outputs from the light-receiving elements, the output of the signal processing section and the timing signal for A/D conversion in the second stage scanning of the two stage scanning.
- FIG. 9: shows a second embodiment of the dimension measurement device according to the present invention.
- FIG. 10: shows a third embodiment of the dimension measurement device according to the present invention.
- FIG. 11: is an illustration of a conventional dimension measurement device.
- FIG. 12A, FIG. 12B: show how the light emitting elements and the light-receiving elements of the dimension measurement device are disposed.

### Embodiments to Implement the Invention

### First Embodiment

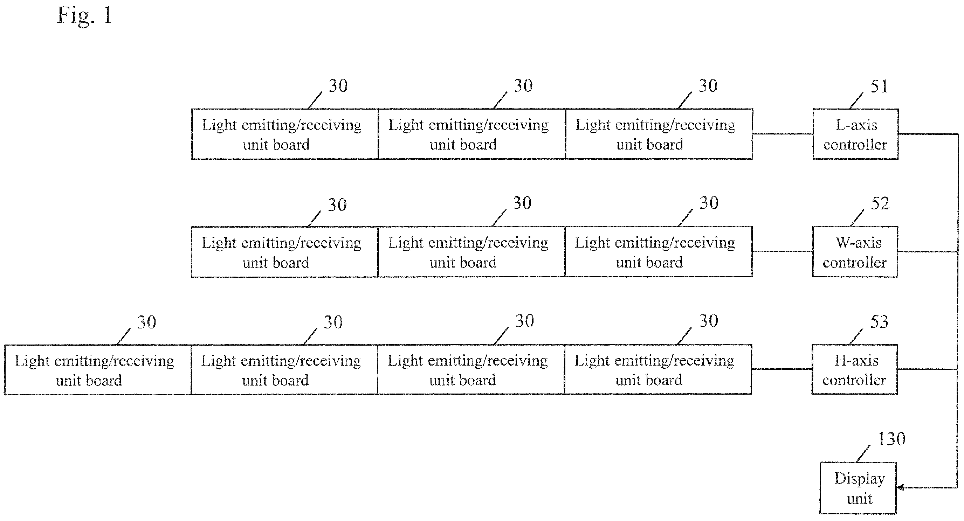

FIG. 1 shows diagrammatically the measurement mechanism of the dimension measurement device according to an embodiment of the present invention. This device is similar to FIG. 11 in outer shape. The measurement mechanism of the length measurement section 22 in FIG. 11 comprises three light emitting/receiving unit boards 30 disposed in line in the length (L) direction and an L-axis controller 51 for controlling the scanning in the length direction, the measurement mechanism of the width measurement section 23 in FIG. 11 comprises three light emitting/receiving unit boards 30 disposed in line in the width (W) direction and a W-axis controller 52 for controlling the scanning in the width direction, and the measurement mechanism of the height measurement section 24 in FIG. 11 comprises four light emitting/receiving unit boards 30 disposed in a line in the height (H) direction and an H-axis controller 53 for controlling the scanning in the height direction.

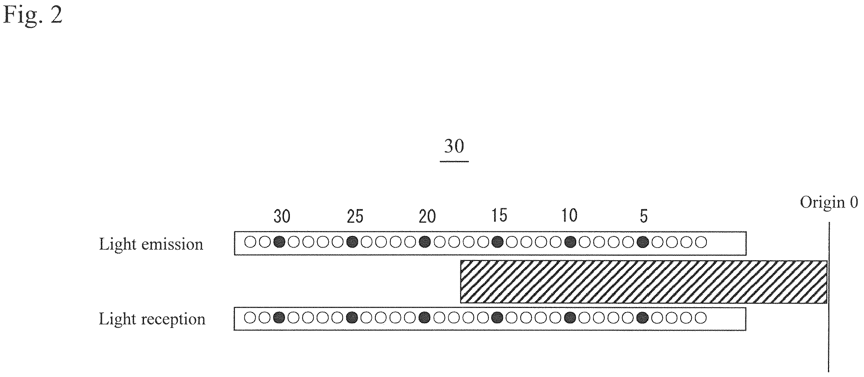

The light emitting/receiving unit board 30 is similar to the one as shown in FIG. 12 (a) and FIG. 12 (b) and comprises an L-shaped or a flat board 12 on which light emitting elements L and light receiving elements P are disposed. Length of one light emitting/receiving unit board 30 is 16 cm in the longitudinal direction and 32 light-emitting elements and light-receiving elements are disposed in the longitudinal direction as shown in FIG. 2.

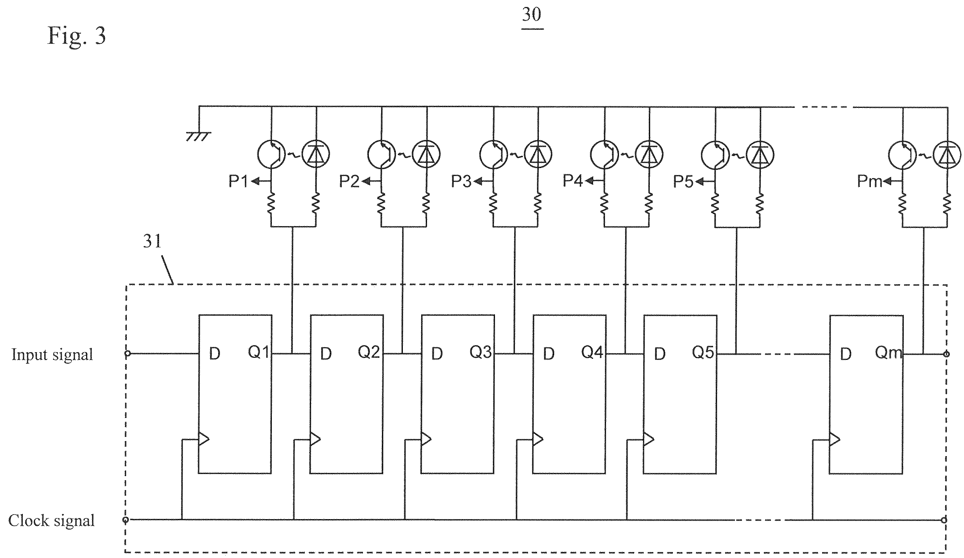

FIG. 3 shows a circuit arrangement of the light emitting/receiving unit board 30. Disposed on the light emitting/receiving unit board 30 are a shift register 31 comprising m-number (thirty two) of flip-flops and m-number of pairs of light-emitting elements and light-receiving elements.

A clock signal from the respective axis controller is inputted to each flip-flop of the shift register 31. A signal inputted to the terminal D of the first stage of the flip-flop is outputted from the terminal Q1 to the subsequent flip-flop in synchronism with the clock signal, and thereafter sequentially outputted from output Q2, output Q3, output Q4 and so on of the subsequent flip-flops with a time delay equal to one clock.

A first pair of the light-emitting element and light-receiving element is activated by the output Q1 from the first stage flip-flop, thereby emitting a light ray from the light-emitting element and sending an output P1 from the light-receiving element to the controller. Whenever the light-receiving element receives the light ray from the light-emitting element, the output level of the output P1 becomes high.

On receiving the subsequent clock, a second pair of the light-emitting element and the light-receiving element is activated by the output Q2 from the flip-flop, thereby sending the output P2 from the light-receiving element to the controller. Similarly, the outputs P3, P4, P5 and so on are sequentially sent to the controller upon receiving the clock.

If a subsequent light-emitting/receiving unit board 30 is coupled to the next light emitting/receiving unit board 30, since clock signal lines for the both are connected to each other, the clock signal from the controller is inputted to all flip-flops constituting the shift registers 31 of all light emitting/receiving unit boards 30. And the output Qm of the flip-flop in the final stage of the shift register is inputted to the terminal D of the first stage flip-flop constituting the shift register in the subsequent light emitting/receiving unit board 30.

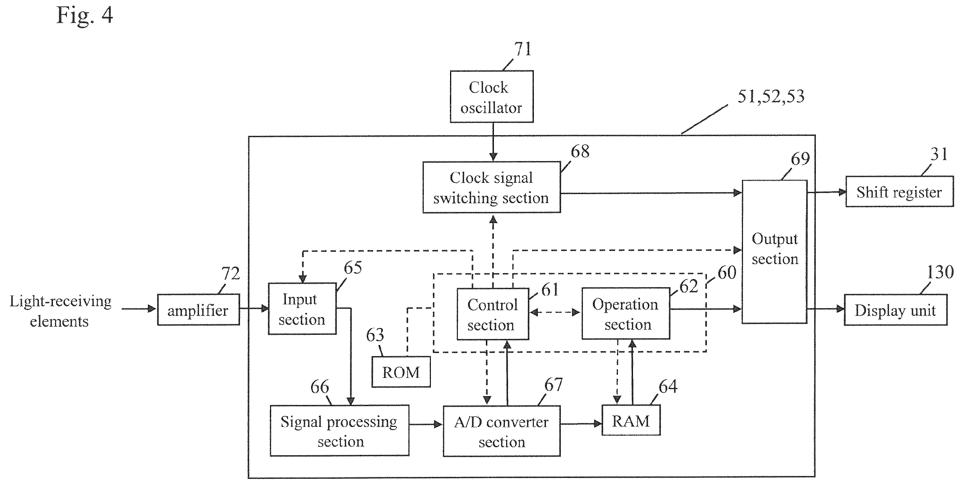

Now, FIG. 4 shows the construction of the L-axis controller 51, the W-axis controller 52 and the H-axis controller 53.

Each of these controllers comprises a CPU 60 including a control section 61 and an operation section 62, a ROM 63 that stores a program to define operation of the CPU 60, a RAM 64 to be used as a data storage area necessary for operation, an input section 65 for receiving a light signal that is outputted from the light-receiving elements in the light emitting/receiving unit board 30 and amplified by an amplifier 72, a signal processing section 66 for signal processing of the received light signal, an A/D converter section 67 for converting the received light signal into a digital signal, a clock signal switching section 68 for processing the clock signal from a clock oscillator 71, and an output section 69 for outputting the dimension data calculated by the operation section 62 to the display unit 130 and also outputting the clock signal processed by the clock signal switching section 68 to the shift register 31.

The L-axis controller 51, the W-axis controller 52 and the H-axis controller 53 perform scanning of pairs of light-emitting elements and light-receiving elements for each axis at the same time. As a result, this device enables to reduce the dimension measurement time to 1/3 or less as compared to the conventional device that switches the scanning for each axis by using a single controller.

In order to further reduce the dimension measurement time, this dimension measurement device performs the scanning in two stages, i.e., a relatively low precision overall scanning (a first stage scanning) and a higher precision partial scanning (a second stage scanning).

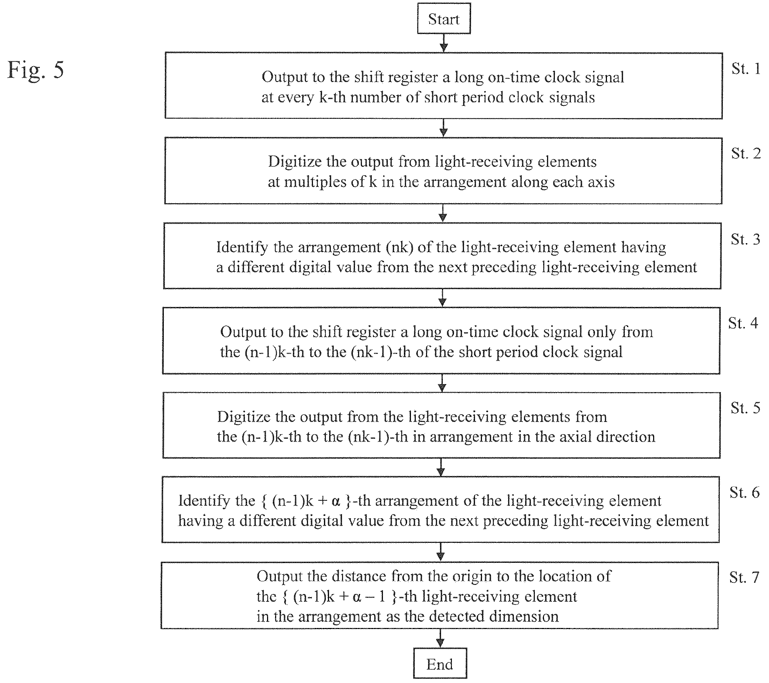

This procedure is shown in FIG. 5.

In order to perform the first stage scanning, the clock signal switching section 68 of each of the controllers 51, 52 and 53 generates under control of the control section 61 a clock signal that has a long on-time at every k-th clock and a shorter in other time by using the clock signal from the clock oscillator 71 for outputting to the shift register 31 in the light emitting/receiving unit board 30 (step 1).

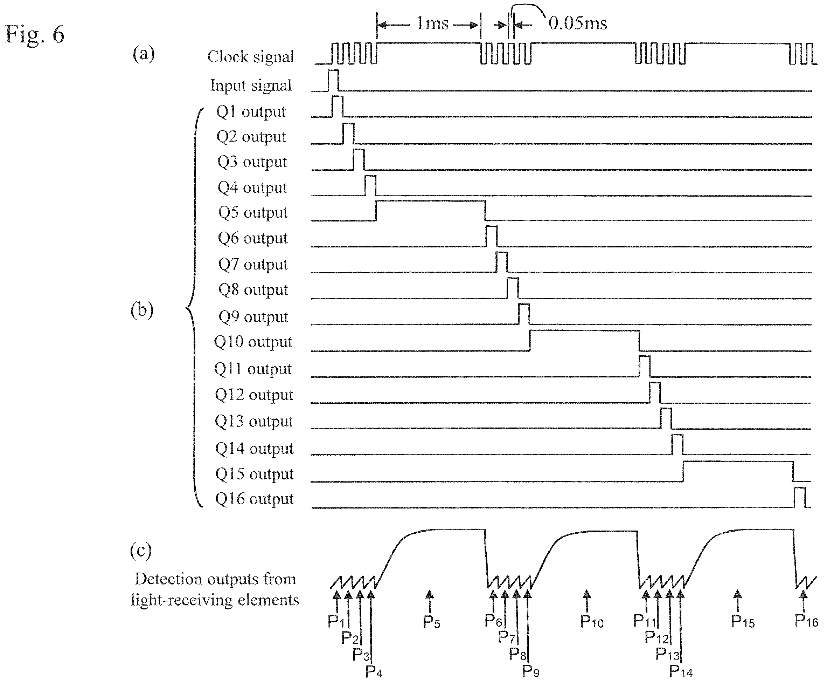

FIG. 6 (a) shows the clock signal to be inputted to the shift register 31. Wherein, k is equal to 5 (k =5) and the on-time of the clock signal at the multiples of 5 in the output order is set to 1 milliseconds (ms), while the on-time of the other clock signals is set to 0.05 ms.

FIG. 6 (b) shows the outputs Q that are outputted from the respective flip-flops in the shift register 31. The outputs Q from the multiples of 5, i.e., the 5-ₜₕ, 10-ₜₕ, 15-ₜₕ flip-flops have a longer time, while the outputs Q from the other flip-flops are short.

Accordingly, the activation time of the multiples of 5, i.e., the 5-ₜₕ, 10-ₜₕ and 15-ₜₕ light-emitting elements and light-receiving elements is longer, while the activation time of the other light-emitting elements and the light-receiving elements is shorter.

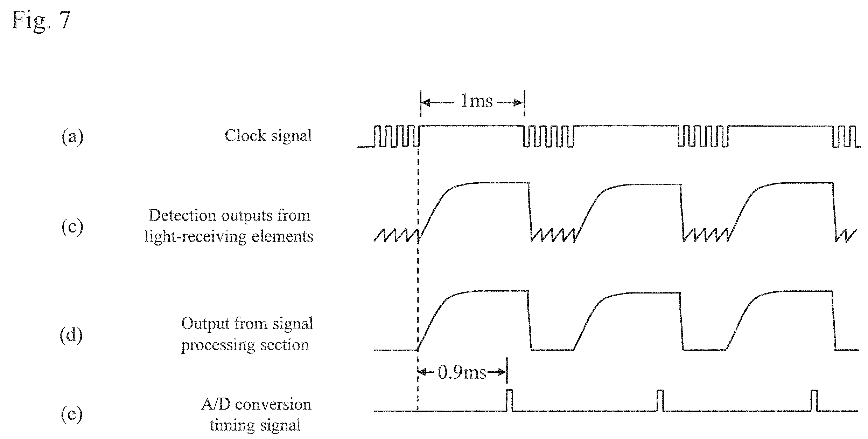

FIG. 6 (c) shows a detected output from each light-receiving element as P1, P2, P3, P4 and so on under the above condition. The detected outputs P5, P10, P15 corresponding to the multiples of 5 from the light-receiving elements when the activation time is long rise to a high level if they are not interrupted from the light-emitting elements. However, the detected outputs from the other light-receiving elements of shorter activation time can never reach the high level even if they are not interrupted from the light-emitting elements. The detection outputs P1, P2, P3, P4 and so on from the light-receiving elements are amplified by the amplifier 72 and sequentially inputted to the respective controllers 51, 52 and 53. As shown in FIG. 7 (d), the signal processing section 66 of each controller 51, 52 and 53 neglects the detected outputs from the light-receiving elements that have the signal level less than the threshold level, while outputting only the detected outputs P5, P10 and P15 corresponding to the multiples of 5.

The signal processed by the signal processing section 66 is inputted to the A/D converter 67 to which the timing signal for A/D conversion is also inputted from the controller 61 as shown in FIG. 7 (e).. In this instance, the controller 61 sends the timing signal to the A/D converter 67 at the time when 0.9ms has passed from the rising of the clock signal having a long on-time of 1 ms. The A/D converter 67 converts the signal from the signal processing section 66 into a digital signal at the instructed timing. As a result, the detection data from the light-receiving elements that are interrupted from the light-emitting elements by the freight among the light-receiving elements corresponding to the multiples of k are 0, while the detection data from non-interrupted light-receiving elements are 1.

The digital data converted by the A/D converter 67 are stored in the RAM 64 in accordance with the sequence of the light-receiving elements, and then completing the first stage scanning (step 2).

In the first stage scanning, the operation section 62 identifies the sequence of the light-receiving element having a different digital data from the next preceding light-receiving element (step 3). If the detection data from the nk-ₜₕ light-receiving element is different from that from the (n-1)k-ₜₕ light-receiving element in the sequence, it is assumed that the edge of the freight is located between them.

In order to perform the second stage scanning, the control section 61 instructs the clock signal switching section 68 to output to the shift register 31 in the light emitting/receiving unit board 30 a long on-time clock signal during (n-1)k-ₜₕ and (nk-1)-ₜₕ time, while outputting short on-time clock pulses in other time (step 4).

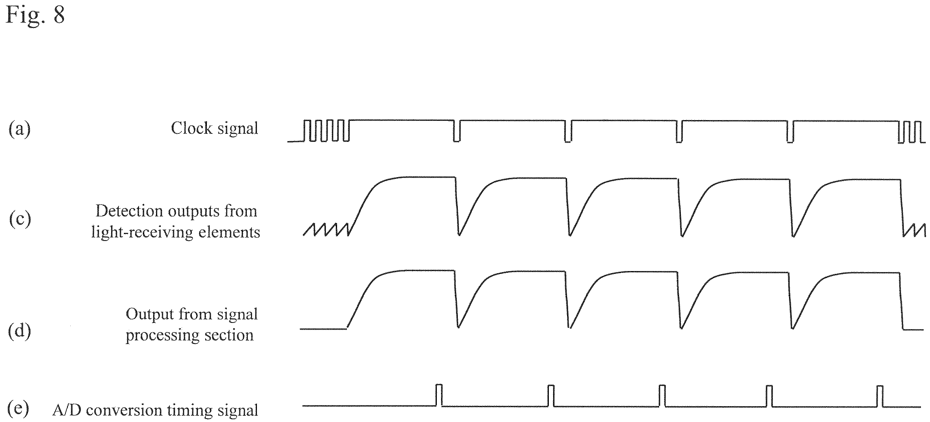

FIG. 8 (a) shows the clock signal for the second stage scanning.

The detection output from the light-receiving element in this condition is shown in FIG. 8 (c) and the detection output from the light-receiving element after processed by the signal processing section 66 is shown in FIG. 8 (d).

The control section 61 sends a timing signal for A/D conversion to the A/D converter section 67 as shown in FIG. 8 (e) and the A/D converter 67 converts the signal inputted from the signal processing section 66 into digital data in accordance with the instructed timing (step 5).

The converted digital data are stored in the RAM 64 in accordance with the sequence of the light-receiving elements before completing the second stage scanning.

In the second stage scanning, the operation section 62 identifies the sequence of the light-receiving element having different digital data from the next preceding light-receiving element (step 6). If the detection data from the [(n - 1)k + α - 1]-ₜₕ light-receiving element in the sequence differs from that from the detection data from the next subsequent [(n - 1)k + α]-ₜₕ light-receiving element, it is assumed that the end of the freight extends to the location of the [(n-1)k + α - 1]-ₜₕ light-receiving element, thereby the detected dimension being equal to the distance from the origin to the location of the [(n - 1)k + α - 1]-ₜₕ light-receiving element (step 7).

In case of performing the two stage scanning in the low precision overall scanning and the high precision partial scanning as described hereinabove, it is possible to reduce the measurement time to about less than half as compared to the case of performing the overall scanning in high precision.

Additionally, this dimension measurement device is capable of adjusting the measurement range in smaller steps in each axial direction by changing the number of light emitting/receiving unit boards 30 that are disposed along each axis.

It is to be noted that the measurement range in each axial direction does not need to be stored in a memory in advance because the number of the pairs of the light emitting/receiving elements are automatically detected by scanning that is performed in a preparation stage at the start-up of the device.

Moreover, this dimension measurement device is capable of simplifying the construction of each light emitting/receiving unit board 30 and reducing its production cost because the scanning control of a plurality of light emitting/receiving unit boards interconnected in each axial direction, signal processing of the detection outputs from the light-receiving elements disposed on these light emitting/receiving unit boards 30, and calculation of the dimensions are all performed by the controller for each axis.

### (Second Embodiment)

In the dimension measurement device as shown in FIG. 11, since the length measurement section 22 and the width measurement section 23 are in existence on the same horizontal plane, there is a possibility to cause measurement errors because the emitted light rays from the light-emitting elements for the length measurement section 22 are reflected by the measurement table 11 made from stainless steel or the like and are received by the light-receiving elements for the width measurement section 23 placed at a short distance from the length measurement section 22, or contrarily the emitted light rays from the light-emitting elements for the width measurement section 23 are reflected by the measurement table 11 and are received by the light-receiving elements for the length measurement section 22 placed at a short distance from the width measurement section 23.

Such problem does not occur in the conventional device in which scanning is performed at every single axis, but it is necessary to consider such problem in the dimension measurement device according to the present invention in which scanning for each axis is performed in parallel for reducing the measurement time.

It is to be noted that since the light-emitting elements and the light-receiving elements for the height measurement section 24 are located at a certain distance from the measurement table 11 even the lowest element, there is no possibility that they cause any affect to the light-receiving elements for the length measurement section 22 or the width measurement section 23 or receiving affect by these light-emitting elements.

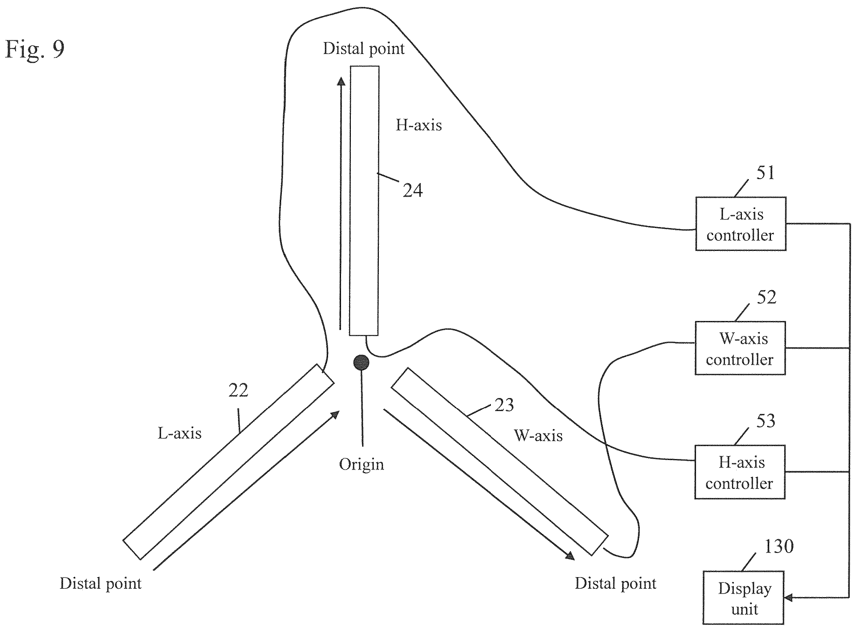

As shown in FIG. 9, in order to avoid any influence in light-emitting and light-receiving between the length measurement section 22 and the width measurement section 23 in the dimension measurement device according to the second embodiment of the present invention, the L-axis controller 51 scans the pairs of the light-emitting elements and the light-receiving elements for the length measurement section 22 from the far end toward the origin, while the w-axis controller 52 scans the pairs of the light-emitting elements and the light-receiving elements for the width measurement section 23 from the origin toward the far end.

As described hereinabove, since directions of scanning are different in the length measurement section 22 and the width measurement section 23 in this device, actuating locations of the pairs of the light-emitting elements and the light-receiving elements for the length measurement section 22 are distant from the actuating locations of the pairs of the light-emitting elements and the light-receiving elements for the width measurement section 23, thereby enabling to avoid interference between them even if the L-axis controller 51, the W-axis controller 52 and the Z-axis controller 53 perform the scanning for the respective axes at the same time.

### (Third Embodiment)

In the third embodiment, a description will be made on a dimension measurement device further comprising means to detect in a non-contact manner if the freight is in contact with the corner of the measurement reference point in addition to the constructions of both of the first and second embodiments.

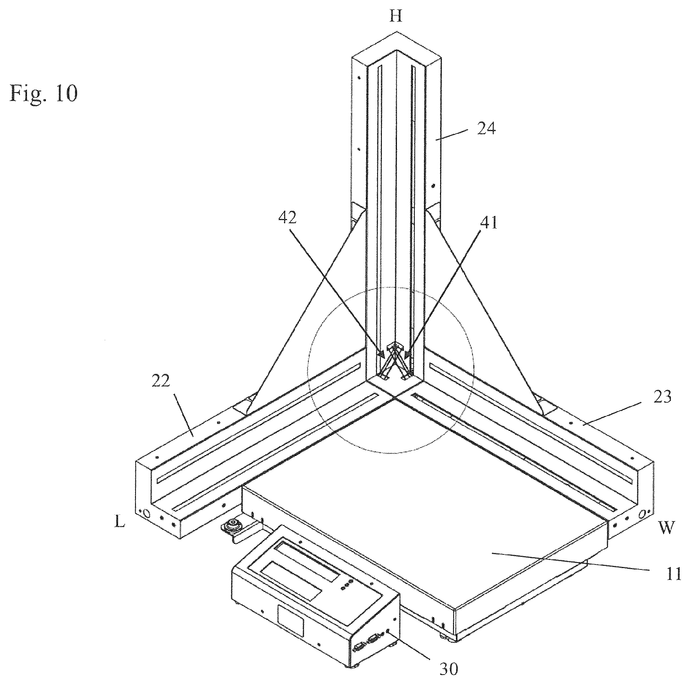

As shown in FIG. 10, this device includes light-emitting elements and light-receiving elements for emitting and receiving a plurality of parallel infrared rays 41 that propagate diagonally from the plane (xy plane) including the L-axis and the W-axis to the plane (xz plane) including the L-axis and the H-axis at the location near the intersection (origin) of the L-axis, the W-axis and the H-axis. Also included are light-emitting elements and light-receiving elements that emit and receive a plurality of parallel infrared rays 42 propagating diagonally from the plane (xy plane) including the L-axis and the W-axis to the plane (yz) plane including the W-axis and the H-axis at the location near the intersection.

Arrangement of the light-emitting elements and the light-receiving elements is the same as disclosed in FIG. 12 (a) and FIG. 12 (b).

If there is any gap between the freight and the W-axis, there are some non-interrupted infrared rays 41 and the number of the non-interrupted infrared rays 41 varies depending on the size of the gap. Similarly, if there is a gap between the freight and the L-axis, there are some non-interrupted infrared rays 42 and the number of the non-interrupted infrared rays 42 varies depending on the size of the gap.

As a result, the infrared rays 41 enable to identify presence/absence or the size of the gap in the L-axis direction and the infrared rays 42 enable to identify presence/absence or the size of the gap in the W-axis direction.

It is to be noted that various figures as given herein are only for the purpose of an example and the present invention should not be restricted thereto.

### Industrial Applicability

The dimension measurement device according to the present invention is capable of measuring the dimensions of a freight in a shorter time and thus can be widely used in distribution business fields or the like that require dimension measurements of a large number of freights.

### Description of Reference Numerals

- 11: measurement table
- 22: length measurement section
- 23: width measurement section
- 24: height measurement section
- 25: side plate
- 26: side plate
- 30: light emitting/receiving unit board
- 31: shift register
- 41: infrared rays
- 42: infrared rays
- 51: L-axis controller
- 52: W-axis controller
- 53: H-axis controller
- 60: CPU
- 61: control section
- 62: operation section
- 63: ROM
- 64: RAM
- 65: input section
- 66: signal processing section
- 67: A/D converter section
- 68: clock signal switching section
- 69: output section
- 71: clock oscillator
- 72: amplifier
- 130: display
- L₁∼L₁₀: light-emitting elements
- P₁∼P₁₀: light-receiving elements

## Claims

1. A dimension measurement device comprises;
a freight mounting plane (11) defining an xy plane of a Cartesian coordinate system having x, y and z axes;
an x-axis direction measurement section (22) for measuring the dimension in the x-axis direction of a cuboid or cubic freight placed on the freight mounting plane;
a y-axis direction measurement section (23) for measuring the dimension of the freight in the y-axis direction; and
a z-axis direction measurement section (24) for measuring the dimension of the freight in the z-axis direction;
wherein the x-axis direction measurement section comprises;
plural arrangements of light emitting/receiving unit boards (30) each including a predetermined number of pairs of light-emitting elements and light-receiving elements and a shift register for driving the light-emitting elements and the light-receiving elements; and
an x-axis controller (51) for controlling the shift register on the light emitting/receiving unit board (30) to continuously scan in one direction the pairs of the light-emitting elements and the light-receiving elements disposed along the x-axis direction so as to calculate the dimension of the freight in the x-axis direction from the origin based on the outputs from the light-receiving elements;
wherein the y-axis direction measurement section comprises;
plural arrangements of the light emitting/receiving unit boards (30); and
a y-axis controller (52) for controlling the shift register on the light emitting/receiving unit board (30) to continuously scan in one direction the pairs of the light-emitting elements and the light-receiving elements disposed along the y-axis direction so as to calculate the dimension of the freight in the y-axis direction from the origin based on the outputs from the light-receiving elements;
wherein the z-axis direction measurement section comprises;
plural arrangements of the light emitting/receiving unit boards (30); and
a z-axis controller (53) for controlling the shift registers on the light emitting/receiving unit board (30) to continuously scan in one direction the pairs of the light-emitting elements and the light-receiving elements disposed along the z-axis direction so as to calculate the dimension of the freight in the z-axis direction from the origin based on the outputs from the light-receiving elements; and
wherein the x-axis controller (51), the y-axis controller (52) and the z-axis controller (53) perform the scanning at the same time.

2. A dimension measurement device of claim 1, wherein the scanning performed by at least one of the x-axis controller (51), the y-axis controller (52) and the z-axis controller (53) consists of a first scanning and a second scanning;
wherein the first scanning and the second scanning is performed by controlling the clock signal to be supplied to the respective shift registers;
wherein the first scanning is performed to detect the outputs from the light-receiving elements of the multiple of k in the arrangement in the respective axial direction so as to identify the order of arrangement nk of the light-receiving elements having a different output value from the next preceding light-receiving element (n-1)k;
wherein the second scanning is performed to detect the outputs of the light-receiving elements of from (n - 1)k to (nk - 1) in the arrangement in the respective axial direction so as to identify the order of arrangement of the light-receiving elements having a different output value from the next preceding light-receiving element; and
wherein k is 2 or larger integer and n is 1 or larger integer.

3. A dimension measurement device of either claim 1 or 2, wherein either one of the x-axis controller (51) and the y-axis controller (52) scans from a position near the origin toward a far position from the origin, while the other of the x-axis controller and the y-axis controller scans from a far position from the origin toward a position near the origin.

4. A dimension measurement device of claims 1, further comprising x-direction gap detection means (41) for detecting the gap between the freight and the yz plane and y-direction gap detection means (42) for detecting the gap between the freight and the xz plane;
wherein x-direction gap detection means (41) detects the gap between the freight and the yz plane by infrared rays emitting diagonally from one of the xy plane and the xz plane to the other at a location near the origin that the x-axis, the y-axis and the z-axis cross; and
wherein y-direction gap detection means (42) detects the gap between the freight and the xz plane by infrared rays emitting diagonally from one of the xy plane and the yz plane to the other at a location near the origin that the x-axis, the y-axis and the z-axis cross.
